# EUROPEAN PATENT APPLICATION

(11) **EP 4 230 404 A1**
(43) Date of publication of application: **23.08.2023**
(21) Application number: 23155603.6
(22) Date of filing: 08.02.2023
(51) Int. Cl.: B32B 18/00, C04B 35/565, C04B 35/571, C04B 35/573, C04B 35/80, C04B 41/00, F01D 11/00

(54) **PREFORM AND METHOD OF MAKING A CERAMIC MATRIX COMPOSITE ARTICLE**

(30) Priority: 18.02.2022 US 202217675543
(71) Applicant: Raytheon Technologies Corporation, Farmington, CT 06032 (US)
(72) Inventor: RIEHL, John D., Hebron, 06248 (US); SUDRE, Olivier H., Glastonbury, 06073 (US); FERNANDEZ, Robin H., East Haddam, 06423 (US); SMITH, Ashley A., Royal Palm Beach, 33414 (US)
(74) Representative: Dehns

(57) **Abstract**

A method of forming a ceramic matrix composite component according to an exemplary embodiment of this disclosure, among other possible things includes laying up plies of ceramic reinforcement material with sacrificial plies to form a preform, infiltrating the preform with a ceramic matrix material, and machining away the sacrificial plies to reveal a surface profile of the ceramic matrix composite component. A preform for a ceramic matrix composite component is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section. The compressor section may include low and high pressure compressors, and the turbine section may also include low and high pressure turbines.

Ceramic matrix composites ("CMC") are being considered for certain gas turbine engine components, and have usefulness in other fields as well. For instance, CMCs can be employed for airfoils in the compressor or turbine sections of a gas turbine engine. Among other attractive properties, CMCs have high temperature resistance. Despite this attribute, however, there are unique challenges to implementing CMCs in airfoils.

### SUMMARY

From one aspect, there is provided a method of forming a ceramic matrix composite component that, among other possible things, includes laying up plies of ceramic reinforcement material with sacrificial plies to form a preform, infiltrating the preform with a ceramic matrix material, and machining away the sacrificial plies to reveal a surface profile of the ceramic matrix composite component.

In an example of the foregoing, the surface profile includes a slot.

In a further example of any of the foregoing, the sacrificial plies fill a volume that is up to about 90% of a volume of the slot.

In a further example of any of the foregoing, the sacrificial plies comprise a graphitic material.

In a further example of any of the foregoing, the sacrificial plies comprise a carbon fabric.

In a further example of any of the foregoing, the carbon fabric is infiltrated with carbon or boron nitride particles.

In a further example of any of the foregoing, the infiltration step is accomplished by chemical vapor infiltration.

In a further example of any of the foregoing, the sacrificial plies are resistant to infiltration of the matrix material during the infiltration step.

In a further example of any of the foregoing, the method further includes the step of examining the preform prior to the infiltrating step.

In a further example of any of the foregoing, the method further includes applying a coating to the ceramic matrix composite component.

In a further example of any of the foregoing, the ceramic reinforcement material includes ceramic fibers.

In a further example of any of the foregoing, the ceramic reinforcement material and the ceramic matrix material are silicon carbide.

There is also provided a preform for a ceramic matrix composite component that, among other possible things, includes plies of ceramic reinforcement material and sacrificial plies arranged with the plies of ceramic reinforcement materials in a footprint of a surface profile for the ceramic matrix composite component.

In an example of any of the foregoing the surface profile includes a slot.

In a further example of any of the foregoing the preform is configured to be formed into a blade outer air seal for a gas turbine engine.

In a further example of any of the foregoing the slot is configured to receive a seal.

In a further example of any of the foregoing the sacrificial plies fill a volume that is up to about 90% of a volume of the slot.

In a further example of any of the foregoing the sacrificial plies comprise a graphitic material.

In a further example of any of the foregoing the sacrificial plies comprise a carbon fabric.

In a further example of any of the foregoing the carbon fabric is infiltrated with carbon or boron nitride particles.

### BRIEF DESCRIPTION OF THE DRAWINGS

Figure 1 schematically shows an example gas turbine engine.
Figure 2 schematically shows an example CMC component for the gas turbine engine of Figure 1.
Figure 3 schematically shows a method for forming the CMC component of Figure 2.

### DETAILED DESCRIPTION

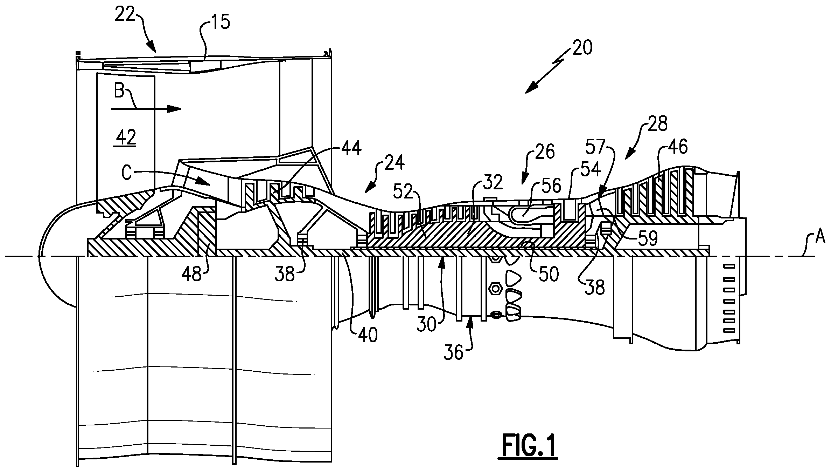

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades. The fan blades may have a fixed stagger angle or may have a variable pitch to direct incoming airflow from an engine inlet. The fan 42 drives air along a bypass flow path B in a bypass duct defined within a housing 15 such as a fan case or nacelle, and also drives air along a core flow path C for compression and communication into the combustor section 26 then expansion through the turbine section 28. A splitter aft of the fan 42 divides the air between the bypass flow path B and the core flow path C. The housing 15 may surround the fan 42 to establish an outer diameter of the bypass duct. The splitter may establish an inner diameter of the bypass duct. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures. The engine 20 may incorporate a variable area nozzle for varying an exit area of the bypass flow path B and/or a thrust reverser for generating reverse thrust.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46, The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Alternatively, the low pressure compressor 44 includes a forward hub and an aft hub driven by the inner shaft 40.

Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. In the illustrated example, the mid-turbine frame 57 only includes a bearing system 38 that supports the high spool 50 and the mid-turbine frame 57 does not support the low speed spool 30. Additionally, a pair of bearing systems 38 are located adjacent a downstream end of the low speed spool 30 adjacent an exhaust outlet of the gas turbine engine to support the low speed spool 30. Furthermore, a bearing assembly 38 can be located radially inward from the combustor 56 and supported by a diffuser case and be used in place of or in addition to the bearing system 38 associated with the mid-turbine frame 57. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C, The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of vanes adjacent the rotatable airfoils. The rotatable airfoils are schematically indicated at, and the vanes are schematically indicated at. In one example, the low pressure compressor 44 includes at least 4 stages and no more than 7 stages and in another example, the low pressure compressor 44 includes at least 5 stages and no more than 7 stages. In both examples, the high pressure compressor 52 includes more stages than the low pressure compressor.

The engine 20 may be a high-bypass geared aircraft engine. The bypass ratio can be greater than or equal to 10.0 and less than or equal to about 18.0, or more narrowly can be less than or equal to 16.0. The geared architecture 48 may be an epicyclic gear train, such as a planetary gear system or a star gear system. The epicyclic gear train may include a sun gear, a ring gear, a plurality of intermediate gears meshing with the sun gear and ring gear, and a carrier that supports the intermediate gears. With the planetary gear system, the ring gear is fixed from rotation relative to the engine static structure 36 and the carrier rotates with the fan 42. With the star gear system, the carrier is fixed from rotation relative to the engine static structure 36 and the ring gear rotates with the fan 42. The sun gear may provide an input to the gear train. The ring gear (e.g., star gear system) or carrier (e.g., planetary gear system) may provide an output of the gear train to drive the fan 42. A gear reduction ratio may be greater than or equal to 2.3, or more narrowly greater than or equal to 3.0, and in some embodiments the gear reduction ratio is greater than or equal to 3.4. The gear reduction ratio may be less than or equal to 4.0 or 4.2. The fan diameter is significantly larger than that of the low pressure compressor 44. The low pressure turbine 46 can have a pressure ratio that is greater than or equal to 8.0 and in some embodiments is greater than or equal to 10.0. The low pressure turbine pressure ratio can be less than or equal to 13.0, or more narrowly less than or equal to 12.0, Low pressure turbine 46 pressure ratio is pressure measured prior to an inlet of low pressure turbine 46 as related to the pressure at the outlet of the low pressure turbine 46 prior to an exhaust nozzle. It should be understood, however, that the above parameters are only exemplary of one embodiment of a geared architecture engine and that the present invention is applicable to other gas turbine engines including direct drive turbofans. All of these parameters are measured at the cruise condition described below.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters), The flight condition of 0.8 Mach and 35,000 ft (10,668 meters), with the engine at its best fuel consumption -- also known as "bucket cruise Thrust Specific Fuel Consumption ('TSFC')" - is the industry standard parameter of lbm of fuel being burned divided by lbf of thrust the engine produces at that minimum point. The engine parameters described above, and those in the next paragraph are measured at this condition unless otherwise specified.

"Fan pressure ratio" is the pressure ratio across the fan blade alone, without a Fan Exit Guide Vane ("FEGV") system. A distance is established in a radial direction between the inner and outer diameters of the bypass duct at an axial position corresponding to a leading edge of the splitter relative to the engine central longitudinal axis A. The fan pressure ratio is a spanwise average of the pressure ratios measured across the fan blade alone over radial positions corresponding to the distance. The fan pressure ratio can be less than or equal to 1.45, or more narrowly greater than or equal to 1.25, such as between 1.30 and 1.40. "Corrected fan tip speed" is the actual fan tip speed in ft/sec divided by an industry standard temperature correction of [(Tram °R) / (518.7 °R)]0.5. The corrected fan tip speed can be less than or equal to 1150.0 ft / second (350.5 meters/second), and can be greater than or equal to 1000.0 ft / second (304.8 meters/second).

Some of the components of the gas turbine engine 20, such as airfoils in the turbine section 28, or blade outer air seals, can be made of ceramic matrix composite (CMC) materials. In general, CMC components include ceramic-based reinforcements, such as fibers, in a ceramic-based matrix. One particular example is a SiC/SiC CMC material, which has silicon carbide reinforcements in a silicon carbide matrix. In the example where the reinforcements are fibers or bundles of fibers (called tows), the fibers can be arranged in a variety of ways that are known in the art, such as unidirectionally, various weaves, braids, etc.

CMC components can include slots, openings, ribs, or other surface features formed therein for various reasons. For instance, slots can be configured to receive seals. As another example, ribs can be formed to disrupt airflow along the surface of the CMC component to provide a cooling effect. Forming these surface geometries by conventional methods requires the removal of CMC materials by drilling, grinding, or the like. Despite their high temperature resistance, however, CMC materials can be brittle and therefore difficult to machine. The formation of surface features in CMC components by conventional methods can require expensive tooling, cause the tooling to wear, often requires shallow depth cuts which in turn leads to slow material removal rates, and overall increases to the cost and complexity of manufacturing the CMC components.

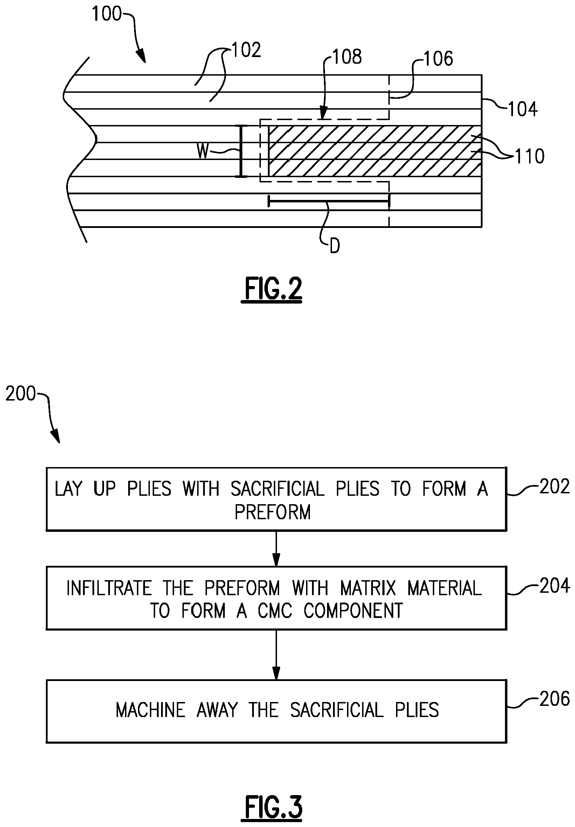

Figure 2 shows a detail view of an example CMC component 100. Figure 3 schematically shows a method 200 of making the CMC component 100. The CMC component 100 comprises multiple plies 102. To form the CMC component 100, in step 202, the plies 102 of reinforcements such as fibers are stacked or "layed-up" in a desired orientation and arrangement to form a preform. The plies 102 may be identical or different from one another, but generally comprise ceramic materials as described above.

The preform has an as-laminated profile or edge 104 that corresponds to the outer surface of the preform. Shown in phantom in Figure 2 is a desired profile 106 for the final CMC component 100, which in this example includes a slot 108 but in other examples could include other surface features as described above. In a particular example, the slot 108 has a width W of between about 0.020 and 0.040 inches (0.51 and 1.02 mm) and a depth D of between about 0.100 and 0.200 inches (2.54 and 5.08 mm).

The area of the slot 108 between the as-laminated profile 104 and the final profile 106 includes sacrificial plies 110. The plies 102 are layed up with the sacrificial plies 110 in step 202. In some examples, the sacrificial plies 110 abut the plies 102 without any adhesive or other fixing means between the sacrificial plies 110 and the plies 102. The sacrificial plies 110 comprise a soft, dense, easy to machine (e.g., mechanically weak) material that is inert with respect to the material of the plies 102. One example is graphitic materials, and in particular GraFoil^{®}, available from NeoGraf Solutions, LLC (Lakewood, OH). Another example is carbon fabrics. The carbon fabrics can be impregnated with fine carbon or boron nitride particles which makes them resistant to matrix infiltration (discussed in more detail below).

Optionally, after forming the preform, the preform can be examined by any known advanced ply placement technique to ensure that the sacrificial plies 110 are located in the footprint of the desired slot 108. One example technique is x-ray computed tomography (xCT).

In some examples, the plies 102 are bonded to one another during step 202. The bonding can be by a polymer binder which decomposes during the subsequent processing steps discussed below, for instance.

After forming the preform, in step 204, the plies 102 are infiltrated by a ceramic-based matrix material by any known process to form a CMC component 100. One example is CVI (chemical vapor infiltration). The sacrificial plies 110 are resistant to CVI gases and therefore substantially no matrix material is deposited on them. In some examples, after step 204, the CMC component 100 is in a densified state and is ready for machining. In other examples, however, the CMC component 100 undergoes various post-processing steps such as curing steps or densification steps after step 204.

As noted above, in examples where a polymer binder is used during step 202, the polymer binder is removed either during or before step 204. Generally, the polymer binder is removed by the application of heat, which causes it to decompose. However, various polymer binders are known in the art, along with methods for removing the polymer binders, and the removal method can be selected according to the character of the polymer binder and/or the ceramic materials in the preform/CMC component 100.

The infiltration step 204 and/or optional post-processing steps may require very high processing temperatures, and the sacrificial plies 110 are selected to withstand such temperatures without deteriorating or losing their form.

In step 206, the sacrificial plies 110 are machined away to reveal the final profile 106 and slot 108. The machining can be by grinding, drilling, or any other known method. In some examples, during step 206, very small amounts of plies 102 are machined away along with the abutting sacrificial plies 110. In other words, the sacrificial plies 110 are sized and arranged such that they take up a volume that is slightly smaller than the volume of the desired slot 108. In some particular examples, the volume taken up by the sacrificial plies 110 is up to about 90% of the volume of the desired slot 108.

CMC component 110 optionally includes coatings that can provide mechanical, thermal, and/or environmental protection to the underlying CMC material. The coatings can be applied before or after the machining step 206.

As used herein, the terms "approximately" and "about" have the typical meaning in the art, however in a particular example "about" or "approximately" can mean deviations of up to 10% of the values described herein.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A method of forming a ceramic matrix composite component (100), comprising:
laying up plies (102) of ceramic reinforcement material with sacrificial plies (110) to form a preform;
infiltrating the preform with a ceramic matrix material; and
machining away the sacrificial plies (110) to reveal a surface profile (106) of the ceramic matrix composite component (100).

2. The method of claim 1, wherein the infiltration step is accomplished by chemical vapor infiltration.

3. The method of claim 1 or 2, wherein the sacrificial plies (110) are resistant to infiltration of the matrix material during the infiltration step.

4. The method of any preceding claim, further comprising the step of examining the preform prior to the infiltrating step.

5. The method of any preceding claim, further comprising applying a coating to the ceramic matrix composite component (100).

6. The method of any preceding claim, where the ceramic reinforcement material includes ceramic fibers.

7. The method of any preceding claim, wherein the ceramic reinforcement material and the ceramic matrix material are silicon carbide.

8. A preform for a ceramic matrix composite component (100), comprising:
plies (102) of ceramic reinforcement material; and
sacrificial plies (110) arranged with the plies (102) of ceramic reinforcement materials in a footprint of a surface profile (106) for the ceramic matrix composite component (100).

9. The preform of claim 8 or method of any of claims 1 to 7, wherein the surface profile (106) includes a slot (108).

10. The preform or method of claim 9, wherein the sacrificial plies (110) fill a volume that is up to about 90% of a volume of the slot (108).

11. The preform of any of claims 8 to 10 or method of any preceding claim, wherein the sacrificial plies (110) comprise a graphitic material.

12. The preform of any of claims 8 to 11 or method of any preceding claim wherein the sacrificial plies (110) comprise a carbon fabric.

13. The preform or method of claim 12, wherein the carbon fabric is infiltrated with carbon or boron nitride particles.

14. The preform of any of claims 8 to 13, wherein the preform is configured to be formed into a blade outer air seal for a gas turbine engine (20).

15. The preform of claim 14 as dependent on claim 9 directly or indirectly, wherein the slot (108) is configured to receive a seal.
